(19) **Europäisches Patentamt**

**European Patent Office**

**Office européen des brevets**

(11) **EP 1 591 854 B1**

(12) **FASCICULE DE BREVET EUROPEEN**

(45) Date de publication et mention
de la délivrance du brevet:
**30.08.2006 Bulletin 2006/35**

(51) Int Cl.:
***G05D 1/00*** *(2006.01)*     ***G05D 1/08*** *(2006.01)*

(21) Numéro de dépôt: **05290678.1**

(22) Date de dépôt: **29.03.2005**

(54) **Procédé d'aide au décollage d'un aéronef**

Flugzeugstartverfahren

Aircraft take off procedure

(84) Etats contractants désignés:
**AT BE BG CH CY CZ DE DK EE ES FI FR GB GR
HU IE IS IT LI LT LU MC NL PL PT RO SE SI SK TR**

(30) Priorité: **28.04.2004 FR 0404494**

(43) Date de publication de la demande:
**02.11.2005 Bulletin 2005/44**

(73) Titulaire: **AIRBUS France**
**31060 Toulouse (FR)**

(72) Inventeurs:
• **Delaplace, Franck**
**31300 Toulouse (FR)**

• **Mathieu, Gérard**
**31820 Pibrac (FR)**
• **Daniel, Nicolas**
**28201 Bremen (DE)**

(74) Mandataire: **Bonnetat, Christian**
**CABINET BONNETAT**
**29, rue de St. Pétersbourg**
**75008 Paris (FR)**

(56) Documents cités:
**EP-A- 1 273 986**

EP 1 591 854 B1

**Description**

La présente invention concerne un procédé d'aide au décollage d'un aéronef permettant d'uniformiser le comportement dudit aéronef lors des rotations de décollage et d'éliminer, ou à tout le moins de réduire, l'influence de variations de certains paramètres de l'aéronef, tels que masse, configuration des becs de bord d'attaque et des volets de bord de fuite, poussée, vitesse au moment de la rotation, etc ...

On sait que certains aéronefs comportent un empennage horizontal stabilisateur, réglable en inclinaison. Un tel empennage horizontal réglable est, dans la technique, désigné par l'une ou l'autre des abréviations PHR (pour Plan Horizontal Réglable) ou THS (pour Trimmable Horizontal Stabiliser). Tout comme un empennage horizontal fixe, un empennage horizontal réglable est pourvu de gouvernes de profondeur formant le bord de fuite dudit empennage horizontal réglable.

Un empennage horizontal réglable peut être braqué dans le sens à cabrer ou à piquer et il est utilisé dans certaines phases de vol. Par exemple, lors du décollage de l'aéronef et préalablement à la rotation, il est usuel de braquer ledit empennage horizontal réglable, par action du pilote ou d'un système automatique, d'un angle de braquage de valeur prédéterminée. La valeur théorique optimale de l'angle de braquage de l'empennage horizontal réglable dépend de plusieurs paramètres de l'aéronef, tels que la position longitudinale du centre de gravité, la masse totale au décollage, la configuration des becs de bord d'attaque et des volets de bord de fuite, la poussée, la vitesse de rotation, etc ...

La valeur réelle de l'angle de braquage est importante car elle conditionne le comportement de l'avion pendant la phase de rotation, qui commence lorsque, l'aéronef ayant atteint en roulant une valeur prédéterminée de vitesse, dite vitesse de rotation, le pilote tire sur le manche pour actionner dans le sens à cabrer lesdites gouvernes de profondeur et qui finit lorsque l'assiette de l'aéronef s'est stabilisée autour d'une valeur prédéterminée, par exemple égale à 15°. Si la valeur réelle de cet angle de braquage est trop à cabrer, il peut s'ensuivre un décollage spontané sans intervention du pilote avec un éventuel toucher de queue ou bien, au contraire, si elle est trop à piquer, un décollage laborieux pénalisant les performances de l'aéronef.

En règle générale, au décollage, la valeur de l'angle de braquage de l'empennage horizontal réglable correspond à un moment à cabrer, ce qui est notamment le cas lorsque le centre de gravité de l'aéronef occupe une position longitudinale avancée vers le nez de l'aéronef : en effet, dans ce cas, l'aéronef est difficile à faire tourner au moment de la rotation et l'empennage horizontal réglable doit créer un moment cabreur élevé. Cependant, lorsque le centre de gravité de l'aéronef est en position longitudinale arrière, l'aéronef a tendance à tourner très facilement et l'empennage horizontal réglable ne doit créer qu'un faible moment de tangage, qui peut être cabreur, voire même piqueur.

Comme il a été rappelé ci-dessus, la valeur théorique optimale de l'angle de braquage, au décollage, de l'empennage horizontal réglable dépend de nombreux paramètres. Aussi, pour un réglage précis de l'inclinaison dudit empennage horizontal réglable, est-il nécessaire de tenir compte de la totalité, ou à tout le moins d'un grand nombre, de ces paramètres, ce qui conduit à des dispositifs de réglage compliqués.

La présente invention a pour objet de remédier à cet inconvénient.

A cette fin, selon l'invention, le procédé d'aide au décollage d'un aéronef comportant des volets de bord de fuite et des becs de bord d'attaque, ainsi qu'un empennage horizontal réglable auquel sont articulées des gouvernes de profondeur, procédé selon lequel :

- on prédétermine une valeur VR de vitesse de l'aéronef, dite vitesse de rotation, à laquelle doit commencer la rotation de décollage, ladite valeur VR devant se trouver dans une plage de valeurs de vitesse imposée par des dispositions réglementaires ; et
- on applique audit aéronef une commande en tangage d'aide au décollage braquant ledit empennage horizontal réglable d'un angle dont la valeur est prédéterminée,

est remarquable en ce que :

- dans ladite plage de valeurs de vitesse, on choisit arbitrairement une vitesse de référence VRref et on détermine, pour cette vitesse de référence VRref, la valeur de l'angle de braquage dudit empennage horizontal réglable uniquement en fonction de la position longitudinale du centre de gravité dudit aéronef au décollage ;
- on détermine l'écart existant entre ladite vitesse de rotation VR et ladite vitesse de référence VRref ; et
- on corrige ladite commande en tangage d'aide au décollage en fonction dudit écart de vitesse, pour rendre semblable, d'un décollage à l'autre, le comportement dudit aéronef à la rotation.

Ainsi, selon la présente invention, l'angle de braquage de l'empennage horizontal réglable n'est rendu dépendant que d'un seul des paramètres cités ci-dessus, à savoir la position longitudinale du centre de gravité de l'aéronef, encore appelée "centrage", qui se trouve être le plus important. On obtient ainsi une grande simplification du dispositif de réglage du braquage dudit empennage horizontal réglable.

Bien entendu, la valeur dudit angle de braquage ainsi obtenue n'est qu'une valeur simplifiée de compromis qui pourrait avoir pour conséquence que , d'un décollage à l'autre, le comportement de l'aéronef à la rotation serait différent, puisqu'un ou plusieurs des paramètres non pris en compte par cette valeur de compromis varie(nt), ce qui perturberait le pilote et pourrait conduite à un toucher du sol par la queue de l'aéronef.

Cependant, cet inconvénient est évité selon l'invention du fait que la vitesse de rotation VR résulte d'un calcul d'optimisation du décollage de l'aéronef prenant en compte aussi bien les caractéristiques dudit aéronef (masse, poussée, configuration des becs et des volets,...) que les caractéristiques de la piste de décollage (longueur, altitude, état, température,...), de sorte que la correction prévue par la présente invention en fonction de l'écart entre VR et VRref -cette valeur de référence VRref étant la même d'un décollage à un autre- permet d'uniformiser le comportement au décollage de l'aéronef en éliminant ou au moins en réduisant l'influence des variations des paramètres non pris en compte.

Ainsi, la présente invention permet de mettre en oeuvre une valeur simplifiée de compromis pour l'angle de braquage dudit empennage horizontal réglable, en évitant les complications entraînées par la prise en compte des nombreux paramètres intervenant dans la valeur théorique de cet angle de braquage et en permettant une uniformisation du comportement de l'aéronef lors de ses décollages successifs.

On remarquera que le document antérieur EP-A-1 273 986 décrit un procédé pour commander au moins une surface aérodynamique de profondeur d'un avion, lors d'une phase de décollage, selon une loi de commande nominale, ce procédé permettant d'écarter le risque de toucher le sol avec la partie arrière du fuselage. Dans ce document antérieur, on détermine l'existence d'un tel risque et, si le risque est avéré, on applique à ladite surface aérodynamique une loi modifiée, différente de ladite loi de commande nominale, empêchant un tel toucher de sol.

Dans le procédé conforme à la présente invention, la correction de ladite commande en tangage d'aide au décollage peut être obtenue par l'action soit dudit empennage horizontal réglable, soit desdites gouvernes de profondeur, ou bien encore pour partie par action dudit empennage horizontal réglable et pour partie par action desdites gouvernes de profondeur.

Par ailleurs, ledit écart de vitesse existant entre lesdites valeurs VR et VRref peut être estimé soit par leur rapport, soit par leur différence.

Puisque, de façon générale, pour un effet égal, la commande en tangage d'un aéronef au décollage doit être d'autant plus à piquer que la vitesse de celui-ci est plus grande, il en résulte que, si la vitesse de rotation VR est supérieure à la vitesse de référence VRref, la correction de ladite commande en tangage d'aide au décollage doit se traduire par une action à piquer et que, inversement, si la vitesse de rotation VR est inférieure à ladite vitesse de référence VRref, la correction de ladite commande en tangage d'aide au décollage doit entraîner une augmentation de l'action à cabrer, ladite correction étant nulle lorsque la vitesse de rotation VR est égale à la vitesse de référence VR ref.

Pour simplifier la mise en oeuvre de l'invention et pour n'avoir à exercer des corrections de commande en tangage d'aide au décollage que dans le sens correspondant à une diminution de l'action à cabrer, on choisit, avantageusement, comme vitesse de référence VRref, la vitesse minimale de la plage de vitesses de rotation dans laquelle doit se trouver ladite vitesse de rotation réelle pour respecter les dispositions réglementaires.

Cette valeur minimale, et donc la vitesse de référence VRref, peuvent alors être égales au produit KxVS1g, dans lequel K est un coefficient supérieur à 1 et VS1g est la vitesse à laquelle ledit aéronef décroche lorsqu'il est en vol horizontal avec une configuration des becs de bord d'attaque et des volets de bord de fuite semblable à celle utilisée pour le décollage.

On notera que l'équation de sustentation à la vitesse de décrochage VS1g s'écrit

$$Mxg = 0,5 \times \rho \times (VS1g)^2 \times Czmax \times S$$

expression dans laquelle M est la masse de l'aéronef, g l'accélération de la pesanteur, $\rho$ la densité de l'air, Czmax le coefficient de portance maximal et S la surface de référence. Il résulte de cette équation que la vitesse de décrochage VS1g dépend de la masse de l'aéronef, de l'altitude (par le densité $\rho$), de la configuration des becs et des volets (par le coefficient Czmax) et de la position longitudinale du centre de gravité de l'aéronef (également par le coefficient Czmax).

Par ailleurs, le coefficient K du produit KxVS1 g dépend du rapport entre la poussée de l'aéronef au décollage et le poids dudit aéronef. Il dépend donc indirectement de l'altitude et de la température (par la poussée) et de la masse de l'aéronef. La valeur moyenne du coefficient K est de l'ordre de 1,11.

Bien que, comme cela a été mentionné ci-dessus, l'écart existant entre lesdites valeurs VR et VRref puisse être estimé par leur rapport, il est tout particulièrement avantageux qu'il soit estimé par leur différence, du type VR-VRref, c'est à dire VR-KxVS1 g en tenant compte de la particularité ci-dessus.

En effet, la différence VR-KxVS1 g indique à l'avance si la rotation de l'aéronef va être rapide ou laborieuse (le moment cabreur engendré par l'empennage horizontal réglable et les gouvernes de profondeur dépend du carré de la vitesse au moment de la rotation) et permet donc d'agir en conséquence. Si la vitesse de rotation réelle VR est égale à la vitesse de rotation de référence KxVS1 g, alors la différence VR-KxVS1 g est nulle et aucune correction de la commande en tangage d'aide au décollage n'est mis en oeuvre. En revanche, si la vitesse de rotation réelle VR est supérieure à la vitesse de rotation de référence KxVS1g, la différence VR-KxVS1g est positive et intervient comme un paramètre pour adapter l'aide en tangage au décollage à ladite vitesse de rotation VR.

Ainsi, dans le cas où l'on met en oeuvre l'empennage horizontal réglable, ladite valeur prédéterminée de l'angle de braquage de ce dernier est augmentée d'un angle supplémentaire $\Delta iH$, positif ou nul, du type

$$\Delta iH = K1 \times (VR - K \times VS1g)$$

expression dans laquelle K1 est un coefficient dépendant de la vitesse de référence VRref, de la position longitudinale du centre de gravité et de la configuration des volets de bord de fuite et des becs de bord d'attaque, le coefficient K1 pouvant, par exemple, présenter une valeur moyenne de l'ordre de 0,16 degré d'angle par noeud de vitesse.

De même, si l'on met en oeuvre les gouvernes de profondeur, celles-ci sont braquées à cabrer d'un angle supplémentaire $\delta q2$ (positif ou nul) dont la valeur est du type

$$\delta q2 = K2 \times (VR - K \times VS1g)$$

expression dans laquelle K2 est un coefficient dépendant également de la vitesse de référence VRref, de la position longitudinale du centre de gravité et de la configuration des volets de bord de fuite et des becs de bord d'attaque.

Si, pour l'aéronef considéré, l'empennage horizontal réglable est n fois plus efficace, en ce qui concerne la commande en tangage, que lesdites gouvernes de profondeur, K2 est choisi n fois plus grand que K1.

La mise en oeuvre du procédé conforme à la présente invention est particulièrement aisée, notamment lorsqu'on utilise les gouvernes de profondeur. En effet, il suffit alors de modifier la caractéristique de l'aéronef donnant le braquage des gouvernes de profondeur en fonction de l'ordre de braquage commandé. Comme on le verra ci-après, de nombreuses modifications de cette caractéristique sont possibles pour mettre en oeuvre l'invention.

Les figures du dessin annexé feront bien comprendre comment l'invention peut être réalisée. Sur ces figures, des références identiques désignent des éléments semblables.

La figure 1 montre, en perspective schématique, un aéronef civil gros porteur pourvu d'un empennage horizontal réglable.

La figure 2 illustre, en trois phases successives usuelles, le décollage dudit aéronef.

Les figures 3A et 3B montrent un exemple de positionnement usuel de l'empennage horizontal réglable et des gouvernes de profondeur qui y sont attachées, respectivement avant et à partir de la rotation de décollage.

La figure 4 illustre un premier exemple de mise en oeuvre du procédé conforme à la présente invention.

La figure 5 illustre un second exemple de mise en oeuvre du procédé conforme à la présente invention.

La figure 6 montre un exemple de diagramme connu, usuel, illustrant la variation de l'angle de braquage des gouvernes de profondeur d'un avion en fonction de l'ordre de braquage commandé.

Les figures 7, 8 et 9 montrent des variantes du diagramme de la figure 6 pour mettre en oeuvre le second exemple du procédé de l'invention, illustré par la figure 5.

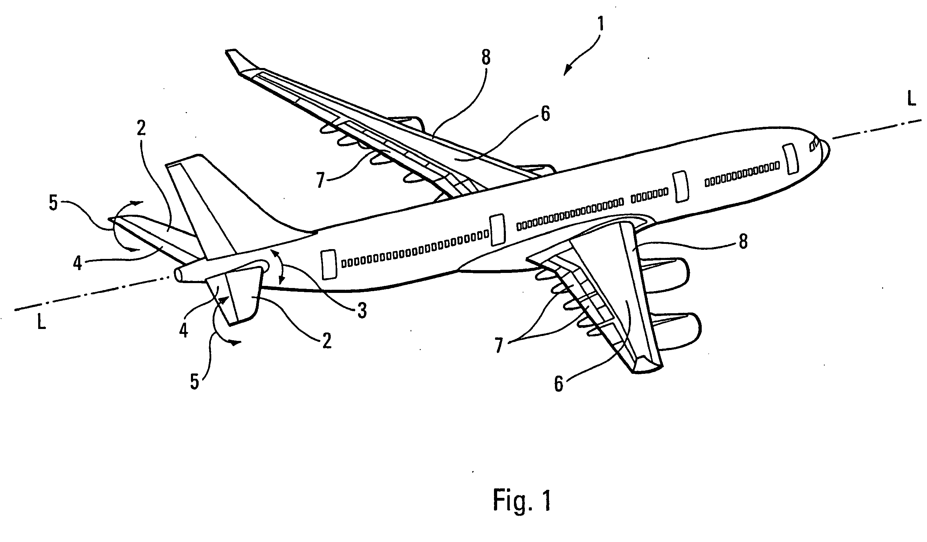

L'avion gros porteur 1, montré schématiquement par la figure 1, présente un axe longitudinal L-L et comporte un empennage horizontal 2 réglable en inclinaison, comme cela est illustré par la double flèche 3. Au bord arrière dudit empennage horizontal réglable 2, sont articulées des gouvernes de profondeur 4 pouvant tourner par rapport audit empennage 2, comme cela est illustré par les doubles flèches 5.

De plus, sur ses ailes 6, l'avion 1 comporte des volets de bord de fuite 7 et des becs de bord d'attaque 8.

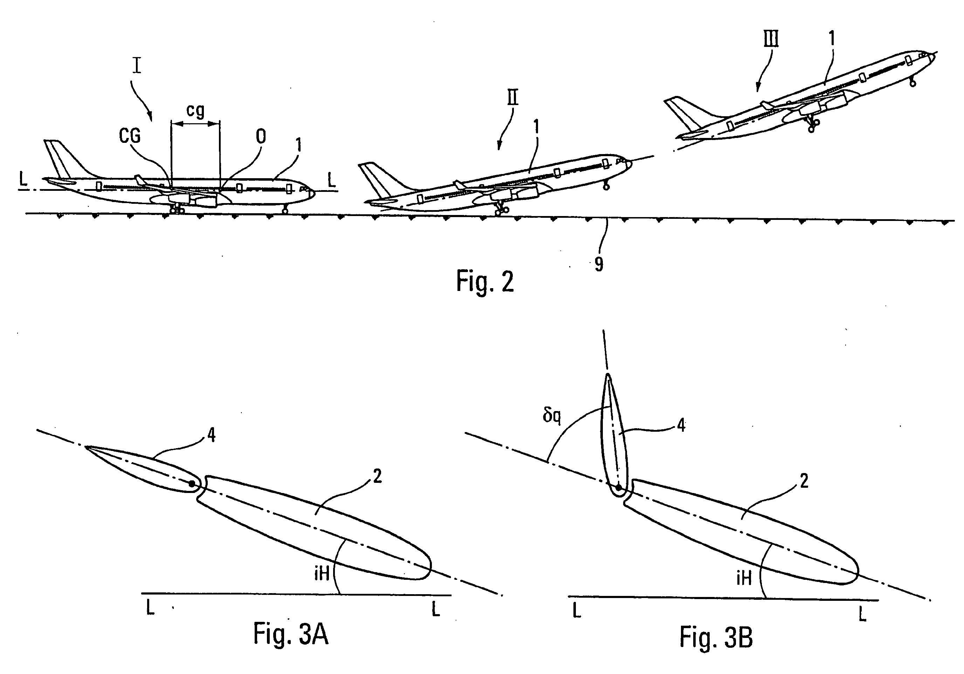

Dans la technique connue, lorsque l'avion 1, reposant sur la piste de décollage 9, se prépare au décollage, on détermine, en fonction d'au moins certains des paramètres mentionnés ci-dessus, d'une part, la vitesse VR à laquelle la rotation de décollage devra commencer et qui doit se trouver dans une plage de valeurs de vitesse imposée par des dispositions réglementaires et, d'autre part, un angle de braquage iH pour l'empennage horizontal réglable 2 et on règle l'inclinaison de celui-ci à cette valeur iH (généralement à cabrer) par rapport audit axe longitudinal L-L (voir la figure 3A), de façon que ledit empennage horizontal réglable 2 soit apte, pendant le décollage, à exercer une action en tangage d'aide au décollage appropriée.

Sur la figure 2, on a illustré les trois phases usuelles I, II et III que connaît l'avion 1 lors de son envol.

Dans la phase I, l'avion 1 roule sur la piste de décollage 9 en accélérant pour atteindre la vitesse de rotation prédéterminée VR.

Pendant cette phase d'accélération I, les volets de bord de fuite 7 et les becs de bord d'attaque 8 sont déployés de façon usuelle (non représentée), l'empennage horizontal réglable 2 est incliné de l'angle iH et les gouvernes de profondeur 4 sont, par exemple, dans leur position prolongeant aérodynamiquement ledit empennage horizontal réglable 2. Dans cette configuration usuelle, illustrée par la figure 3A, l'ensemble dudit empennage horizontal réglable 2 et des gouvernes de profondeur 4 engendre une force aérodynamique à cabrer produisant un moment de tangage à cabrer pour l'avion 1.

Toujours de façon usuelle, lorsque l'avion 1 atteint en roulant sur la piste 9 la vitesse de rotation VR (phase II sur la figure 2), le pilote actionne les gouvernes de profondeur 4 pour leur faire prendre une position à cabrer, définie par une valeur δq de l'angle de braquage par rapport à l'empennage horizontal réglable 2 (voir la figure 3B). L'ensemble dudit empennage horizontal réglable 2 et des gouvernes 4 engendre alors une force aérodynamique à cabrer et un moment de tangage à cabrer, respectivement supérieurs à ceux engendrés dans la disposition de la figure 3A et aptes à provoquer l'envol de l'avion 1.

Pendant cet envol, l'empennage horizontal réglable 2 est maintenu dans sa position inclinée définie par l'angle iH avec les gouvernes 4 braquées à cabrer de l'angle δq (figure 3B).

Après stabilisation de l'avion 1 sur une trajectoire inclinée (phase III sur la figure 2), l'empennage horizontal réglable 2 est ramené parallèlement à l'axe L-L, avec les gouvernes de profondeur 4 en prolongement aérodynamique dudit empennage 2.

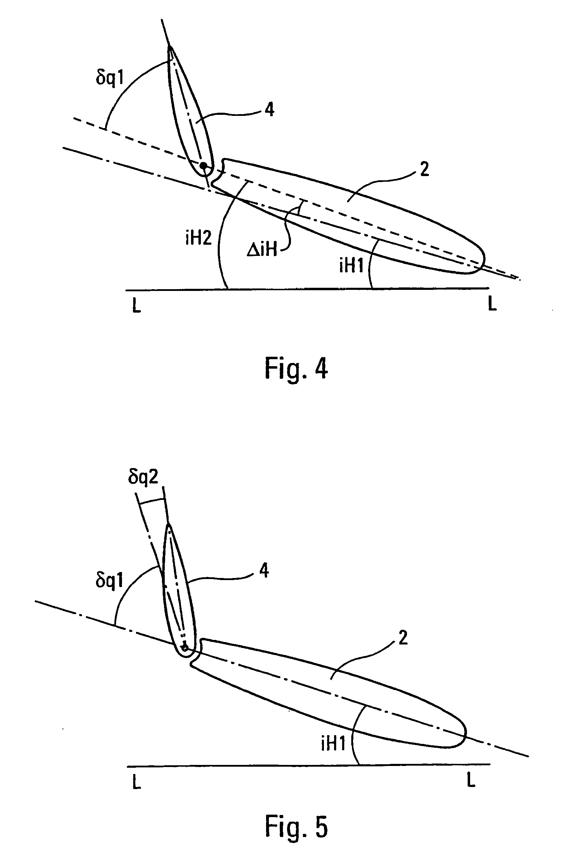

Dans le procédé d'aide au décollage conforme à la présente invention, en plus de la prédétermination de la vitesse de rotation VR, on choisit arbitrairement, dans ladite plage de valeurs de vitesse imposée par les dispositions réglementaires régissant l'exploitation des avions de transport civils, une vitesse de référence VRref et on détermine, pour cette vitesse de référence arbitraire VRref, la valeur prédéterminée iH1 de l'angle de braquage dudit empennage horizontal réglable 2 (voir les figures 4 et 5), uniquement en fonction de la position longitudinale du centre de gravité CG le long de l'axe L-L, obtenue par calcul de la distance cg dudit centre de gravité par rapport à une origine O (voir la figure 2). Ensuite, on détermine l'écart existant entre les valeurs VR et VRref (soit par le rapport VR/VRref, soit par la différence VR-VRref) et on corrige, avant ou pendant la rotation, l'action en tangage qui serait exercée par l'empennage horizontal réglable 2 braqué de l'angle iH1, comme cela est expliqué ci-après, en regard des figures 4 et 5.

Pour simplifier la mise en oeuvre de l'invention, celle-ci prévoit, dans un mode de réalisation avantageux, que la vitesse de rotation de référence VRref est choisie égale à la plus petite vitesse de cette plage de vitesses de rotation imposée par les dispositions réglementaires pour l'avion 1 dans les conditions de décollage. Ainsi, la vitesse de rotation réelle VR commandée par le pilote est forcément égale ou supérieure à la vitesse de rotation de référence VRref, de sorte que la différence VR-VRref est nulle ou positive et que le rapport VR/VRref est égal ou supérieur à 1. Il en résulte que, quelle que soit la valeur de VR (à l'intérieur de ladite plage de vitesses imposée) autre que VRref, la correction effectuée par la présente invention est toujours dans le sens à piquer. En revanche, si VR est égale à VRref, la correction apportée par l'invention est nulle.

Dans ces conditions, la vitesse de rotation de référence VRref peut être choisie égale au produit KxVS1g, dans lequel K est un coefficient supérieur à 1 et VS1g est la vitesse à laquelle ledit aéronef 1 décroche lorsqu'il est en vol horizontal avec une configuration des becs de bord d'attaque 8 et des volets de bord de fuite 7 semblable à celle utilisée pour le décollage.

Ce coefficient K dépend du rapport entre la poussée de l'avion 1 au décollage et le poids dudit avion. Sa valeur moyenne est voisine de 1,11.

La correction de commande en tangage conforme à la présente invention peut être apportée par action sur l'empennage horizontal réglable 2 (voir la figure 4), par action sur les gouvernes de profondeur 4 (voir la figure 5) ou par action sur l'empennage horizontal réglable 2 et sur les gouvernes de profondeur 4.

Dans le cas où ladite correction est obtenue par la mise en oeuvre de l'empennage horizontal réglable 2, on ajoute un angle de correction ΔiH à l'angle iH 1, de préférence avant la phase d'accélération I. Ainsi, pendant cette phase d'accélération I, l'empennage horizontal réglable 2 est incliné de l'angle iH2=iH1 + ΔiH comme illustré sur la figure 4. Si on utilise la différence VR-VRref, c'est-à-dire dans l'exemple ci-dessus VR-KxVS1g, comme paramètre pour estimer l'écart entre lesdites valeurs VR et VRref, l'angle de correction ΔiH est avantageusement du type

$$\Delta iH = K1 \times (VR - K \times VS1g)$$

expression dans laquelle K1 est un coefficient dépendant de la vitesse de référence VRref, de la position longitudinale cg du centre de gravité CG et de la configuration des volets de bord de fuite 7 et des becs de bord d'attaque 8. Sa valeur moyenne est de l'ordre de 0,16°/kt.

Ensuite, lorsqu'à la fin de la phase d'accélération I, l'avion 1 atteint la vitesse de rotation VR, le pilote braque les gouvernes de profondeur 4 d'un angle δq1 δq1 (voir la figure 4) pour amorcer la rotation de la phase II.

Si, en variante, ladite correction conforme à la présente invention est obtenue par la mise en oeuvre des gouvernes de profondeur 4, on ajoute un angle de correction $\delta q2$ à l'angle $\delta q1$ dès le début de la rotation pour tenir compte du fait que VR est supérieure à VRref (voir la figure 5). En prenant en considération les particularités mentionnées ci-dessus, l'angle de correction $\delta q2$ est avantageusement du type

$$\delta q2 = K2 \,(VR\text{-}KxVS1g)$$

expression dans laquelle K2 est un coefficient dépendant de la vitesse de référence VRref, de la position longitudinale cg du centre de gravité CG et de la configuration des volets de bord de fuite 7 et des becs de bord d'attaque 8. Si ledit empennage horizontal réglable 2 est n fois plus efficace, en ce qui concerne la commande en tangage, que lesdites gouvernes de profondeur 4, K2 est égal à n fois K1.

De ce qui précède, on comprendra aisément que la correction en tangage conforme à la présente invention peut être mise en oeuvre par combinaison des actions de l'empennage horizontal réglable 2 et des gouvernes de profondeur 4.

La variante du procédé conforme à la présente invention utilisant les gouvernes de profondeur 4 est particulièrement aisée à mettre en oeuvre sur l'avion 1 .

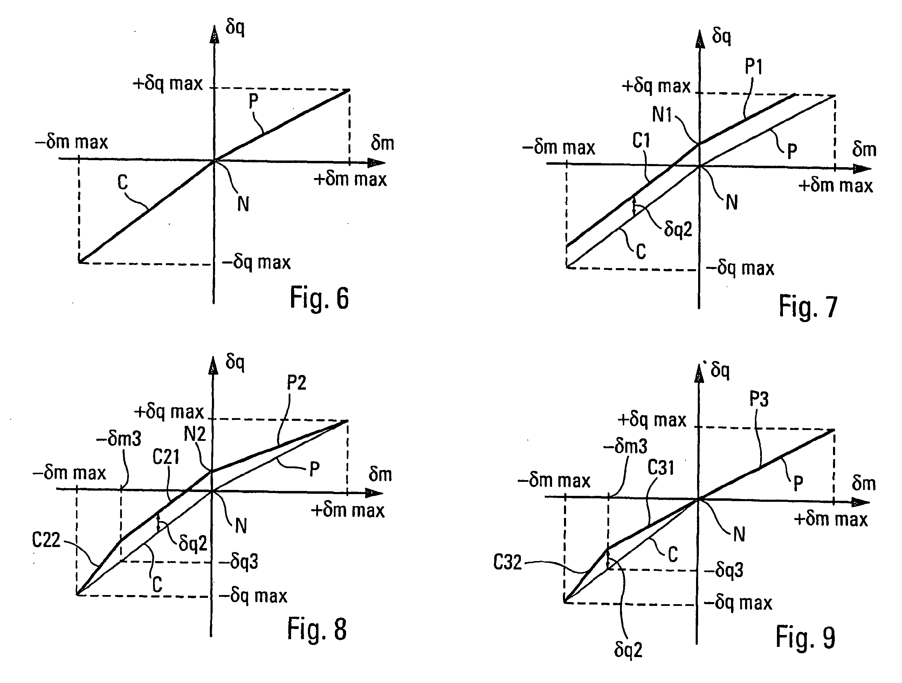

On sait en effet que, comme cela est illustré sur la figure 6, la caractéristique de l'avion 1 donnant, dans un système d'axes rectangulaires, l'angle de braquage $\delta q$ des gouvernes de profondeur 4 en fonction de l'ordre de braquage $\delta m$ au manche comporte une partie à piquer P, généralement linéaire, et une partie à cabrer C, généralement linéaire également, lesdites parties à piquer et à cabrer P et C étant raccordées l'une à l'autre en un point neutre N. Ainsi, pour une variation de l'ordre de braquage $\delta m$ à piquer entre 0 et une valeur maximale $+\delta mmax$ (et inversement entre $+\delta mmax$ et 0), le braquage à piquer des gouvernes 4 varie entre 0 et une valeur maximale $+\delta qmax$ (et inversement entre $+\delta qmax$ et 0). De même, pour une variation de l'ordre de braquage $\delta m$ à cabrer entre 0 et une valeur maximale $-\delta mmax$ (et inversement entre $-\delta mmax$ et 0), le braquage à cabrer des gouvernes 4 varie entre 0 et une valeur maximale $-\delta qmax$ (et inversement entre $-\delta qmax$ et 0).

Dans l'exemple de mise en oeuvre de l'invention illustrée par la figure 7, on a modifié la caractéristique C, P connue, montrée par la figure 6, en y ajoutant l'angle de correction $\delta q2$ (figure 5) aussi bien sur la partie à piquer P que sur la partie à cabrer C. On obtient ainsi une caractéristique modifiée C1, P1, propre à la présente invention et résultant d'une translation d'amplitude $\delta q2$ en direction de $+\delta qmax$, parallèlement à l'axe $\delta q$. Le point neutre N subit également une telle translation, de sorte que le point N1 résultant n'est plus neutre puisque pour l'abscisse $\delta m=0$, son ordonnée est égale à $\delta q2$.

Dans le deuxième exemple de mise en oeuvre illustré par la figure 8, on introduit le point de la partie à cabrer C, défini par les coordonnées $-\delta m3$ et $-\delta q3$ et correspondant à l'angle de braquage $\delta q1$ utilisé pour la rotation (voir figure 3B). Par exemple, $-\delta m3$ et $-\delta q3$ sont respectivement égaux aux deux tiers de $-\delta mmax$ et $-\delta qmax$. Dans cet exemple, la partie à cabrer modifiée comporte, entre $-\delta m3$ et 0, une première portion C21 ayant subi, comme la partie à cabrer C1 de la figure 7, une translation d'amplitude $\delta q2$ en direction de $+\delta qmax$, parallèlement à l'axe $\delta q$, et une seconde portion C22, inclinée, joignant le point $-\delta m3$, $-\delta q3 + \delta q2$ au point $-\delta mmax$, $-\delta qmax$. Dans ce deuxième exemple, le point neutre N est déplacé en N2 (semblable à N1) et la partie à piquer P2 de la caractéristique modifiée est inclinée et joint le point N2 au point $+\delta mmax$, $+\delta qmax$.

La caractéristique modifiée du troisième exemple de la figure 9 comporte une partie à piquer P3 identique à la partie P de la caractéristique C, P de la figure 6, une première portion C31 de partie à piquer joignant le point $-\delta m3$, $-\delta q3+\delta q2$ au point neutre N et une seconde portion C32 de partie à piquer identique à la portion C22 de la figure 8.

Bien entendu, les trois exemples de caractéristiques modifiées C1, P1 - C21, C22, P2 - C31, C32, P3 donnés par les figures 7, 8 et 9 ne sont pas limitatifs, de nombreuses autres modifications de la caractéristique C, P étant envisageables.

Dans le cas usuel où l'avion 1 comporte un calculateur (non représenté) dans lequel est stockée une loi de décollage, il est avantageux que le procédé conforme à la présente invention soit intégré à ladite loi.

**Revendications**

**1.** Procédé d'aide au décollage d'un aéronef (1) comportant des volets de bord de fuite (7) et des becs de bord d'attaque (8), ainsi qu'un empennage horizontal réglable (2) auquel sont articulées des gouvernes de profondeur (4), procédé selon lequel :

- on prédétermine une valeur VR de vitesse de l'aéronef, dite vitesse de rotation, à laquelle doit commencer la rotation de décollage, ladite valeur VR devant se trouver dans une plage de valeurs de vitesse imposée par des dispositions réglementaires ; et
- on applique audit aéronef (1) une commande en tangage d'aide au décollage braquant ledit empennage horizontal réglable (2) d'un angle dont la valeur est prédéterminée,

**caractérisé en ce que** :

- dans ladite plage de valeurs de vitesse, on choisit arbitrairement une vitesse de référence VRref et on détermine, pour cette vitesse de référence VRref, la valeur (iH1) de l'angle de braquage dudit empennage horizontal réglable uniquement en fonction de la position longitudinale (cg) du centre de gravité (CG) dudit aéronef au décollage ;
- on détermine l'écart existant entre ladite vitesse de rotation VR et ladite vitesse de référence VRref ; et
- on corrige ladite commande en tangage d'aide au décollage en fonction dudit écart de vitesse, pour rendre semblable, d'un décollage à l'autre, le comportement dudit aéronef à la rotation.

2.  Procédé selon la revendication 1,
    **caractérisé en ce que** la correction de ladite commande en tangage d'aide au décollage est obtenue par l'intermédiaire dudit empennage horizontal réglable (2).

3.  Procédé selon la revendication 1,
    **caractérisé en ce que** la correction de ladite commande en tangage d'aide au décollage est obtenue par l'intermédiaire desdites gouvernes de profondeur (4).

4.  Procédé selon les revendications 2 et 3,
    **caractérisé en ce que** la correction de ladite commande en tangage d'aide au décollage est obtenue, pour partie, par l'intermédiaire dudit empennage horizontal réglable (2) et, pour partie, par l'intermédiaire desdites gouvernes de profondeur (4).

5.  Procédé selon l'une des revendications 1 à 4,
    **caractérisé en ce que** ledit écart de vitesse existant entre lesdites valeurs VR et VRref est estimé par le rapport entre celles-ci.

6.  Procédé selon l'une des revendications 1 à 4,
    **caractérisé en ce que** ledit écart de vitesse existant entre lesdites valeurs VR et VRref est estimé par la différence entre celles-ci.

7.  Procédé selon l'une quelconque des revendications 1 à 6,
    **caractérisé en ce que** ladite vitesse de référence VRref est choisie égale à la valeur de vitesse minimale de ladite plage.

8.  Procédé selon la revendication 7,
    **caractérisé en ce que** ladite vitesse de référence VRref est égale au produit KxVS 1g, dans lequel K est un coefficient supérieur à 1 et VS1g est la vitesse à laquelle ledit aéronef (1) décroche lorsqu'il est en vol horizontal avec une configuration des becs de bord d'attaque (8) et des volets de bord de fuite (7) semblable à celle utilisée pour le décollage.

9.  Procédé selon la revendication 8,
    **caractérisé en ce que** le coefficient K dépend du rapport entre la poussée de l'aéronef (1) au décollage et le poids dudit aéronef.

10. Procédé selon la revendication 9,
    **caractérisé en ce que** le coefficient K présente une valeur moyenne voisine de 1,11.

11. Procédé selon les revendications 2, 6 et 8,
    **caractérisé en ce que** la valeur prédéterminée (iH1) de l'angle de braquage dudit empennage horizontal réglable (2) est augmentée d'une valeur supplémentaire $\Delta$iH, du type

$$\Delta iH = K1 \times (VR - K \times VS1g)$$

expression dans laquelle K1 est un coefficient dépendant de la vitesse de référence VRref, de la position longitudinale (cg) du centre de gravité (CG) et de la configuration des volets de bord de fuite (7) et des becs de bord d'attaque (8).

12. Procédé selon la revendication 11,
**caractérisé en ce que** la valeur moyenne de K1 est de l'ordre de 0,16°/kt.

13. Procédé selon les revendications 3, 6 et 8,
**caractérisé en ce que** lesdites gouvernes de profondeur (4) sont braquées à cabrer d'un angle supplémentaire $\delta q2$ dont la valeur est du type

$$\delta q2 = K2 \times (VR - K \times VS1g)$$

expression dans laquelle K2 est un coefficient dépendant de la vitesse de référence VRref, de la position longitudinale (cg) du centre de gravité (CG) et de la configuration des volets de bord de fuite (7) et des becs de bord d'attaque (8).

14. Procédé selon les revendications 11 et 13, appliqué à un aéronef (1) dans lequel ledit empennage horizontal réglable (2) est <u>n</u> fois plus efficace, en ce qui concerne la commande en tangage, que lesdites gouvernes de profondeur (4),
**caractérisé en ce que** K2 = nxK1.

15. Procédé selon la revendication 13, dans lequel la caractéristique (C, P) attachée à l'avion (1) et donnant le braquage ($\delta q$) des gouvernes de profondeur (4) en fonction de l'ordre de braquage ($\delta m$) desdites gouvernes de profondeur (4) comporte une partie à piquer (P) et une partie à cabrer (C) raccordées l'une à l'autre en un point neutre (N),
**caractérisé en ce qu'**on modifie ladite caractéristique (C, P) en y ajoutant ledit angle supplémentaire $\delta q2$.

16. Procédé selon la revendication 15,
**caractérisé en ce que** ledit angle supplémentaire $\delta q2$ est additionné en au moins un point de ladite partie à cabrer (C).

**Claims**

1. A process for aiding the takeoff of an aircraft (1) comprising trailing edge flaps (7) and leading edge slats (8), as well as an adjustable horizontal tailplane (2) to which are hinged elevators (4), in which process:

   - a value VR of speed of the aircraft, the so-called rotation speed, at which the takeoff rotation must begin is predetermined, said value VR having to lie in a range of values of speed imposed by regulatory provisions; and
   - a pitch command for aiding takeoff deflecting said adjustable horizontal tailplane (2) by an angle whose value is predetermined is applied to said aircraft (1),

   wherein:

   - in said range of speed values, a reference speed VRref is chosen arbitrarily and, for this reference speed VRref, the value (iH1) of the angle of deflection of said adjustable horizontal tailplane is determined solely as a function of the longitudinal position (cg) of the center of gravity (CG) of said aircraft on takeoff;
   - the deviation existing between said rotation speed VR and said reference speed VRref is determined; and
   - said pitch command for aiding takeoff is corrected as a function of said speed deviation, in order to make similar, from one takeoff to another, the behavior of said aircraft on rotation.

2. The process as claimed in claim 1,
   wherein the correction of said pitch command for aiding takeoff is obtained by way of said adjustable horizontal tailplane (2).

3. The process as claimed in claim 1,

wherein the correction of said pitch command for aiding takeoff is obtained by way of said elevators (4).

4. The process as claimed in claims 2 and 3,
wherein the correction of said pitch command for aiding takeoff is obtained, in part, by way of said adjustable horizontal tailplane (2) and, in part, by way of said elevators (4).

5. The process as claimed in anyone of claims 1 to 4,
wherein said speed deviation existing between said values VR and VRref is estimated by the ratio between them.

6. The process as claimed in anyone claims 1 to 4,
wherein said speed deviation existing between said values VR and VRref is estimated by the difference between them.

7. The process as claimed in anyone claims 1 to 6,
wherein said reference speed VRref is chosen equal to the minimum speed value of said range.

8. The process as claimed in claim 7,
wherein said reference speed VRref is equal to the product $K \times VS1g$, in which K is a coefficient greater than 1 and VS1g is the speed at which said aircraft (1) stalls when it is flying horizontally with a configuration of the leading edge slats (8) and of the trailing edge flaps (7) which is similar to that used for takeoff.

9. The process as claimed in claim 8,
wherein the coefficient K depends on the ratio of the thrust of the aircraft (1) at takeoff to the weight of said aircraft.

10. The process as claimed in claim 9,
wherein the coefficient K exhibits a mean value of around 1.11.

11. The process as claimed in claims 2, 6 and 8,
wherein the predetermined value (iH1) of the angle of deflection of said adjustable horizontal tailplane (2) is increased by an additional value ΔiH of the type

$$\Delta iH = K1 \times (VR - K \times VS1g)$$

in which expression K1 is a coefficient dependent on the reference speed VRref, the longitudinal position (cg) of the center of gravity (CG) and the configuration of the trailing edge flaps (7) and of the leading edge slats (8).

12. The process as claimed in claim 11,
wherein the mean value of K1 is of the order of 0.16°/kt.

13. The process as claimed in claim 3, 6 and 8,
wherein said elevators (4) are nose-up deflected by an additional angle δq2 whose value is of the type

$$\delta q2 = K2 \times (VR - K \times VS1g)$$

in which expression K2 is a coefficient dependent on the reference speed VRref, the longitudinal position (cg) of the center of gravity (CG) and the configuration of the trailing edge flaps (7) and of the leading edge slats (8).

14. The process as claimed in claims 11 and 13, applied to an aircraft (1) in which said adjustable horizontal tailplane (2) is n times more effective, as regards the pitch command, than said elevators (4), wherein $K2 = n \times k1$.

15. The process as claimed in claim 13, in which the characteristic (C, P) tied to the airplane (1) and giving the deflection (δq) of the elevators (4) as a function of the order of deflection (δm) of said elevators (4) comprises a nose-down part (P) and a nose-up part (C) that are linked together at a neutral point (N),
wherein said characteristic (C, P) is modified by supplementing it with said additional angle δq2.

**16.** The process as claimed in claim 15,
wherein said additional angle δq2 is added at at least one point of said nose-up part (C).


## Patentansprüche

**1.** Starthilfeverfahren für ein Flugzeug (1), das Hinterkantenklappen (7) und Vorflügel (8) sowie eine verstellbare Höhenflosse (2) aufweist, an die Höhenruder (4) angelenkt sind, gemäß dem man:

- einen Wert VR für die Geschwindigkeit des Flugzeuges, die sogenannte Rotationsgeschwindigkeit, vorgibt, bei dem die Rotation beim Start beginnen muss, wobei dieser Wert VR innerhalb eines Bereichs von Geschwindigkeitswerten liegen muss, der durch Vorschriften festgelegt ist; und
- zur Starthilfe die Nicklage des Flugzeuges (1) steuert, indem man die verstellbare Höhenflosse (2) um einen Winkel ausschlägt, dessen Wert vorgegeben ist,

**dadurch gekennzeichnet, dass** man:

- aus dem Bereich der Geschwindigkeitswerte eine beliebige Referenzgeschwindigkeit VRref auswählt und für diese Referenzgeschwindigkeit VRref den Wert (iH1) des Ausschlagwinkels der verstellbaren Höhenflosse einzig in Abhängigkeit von der Längsposition (cg) des Schwerpunktes (CG) des Flugzeuges beim Start bestimmt;
- die Abweichung zwischen der Rotationsgeschwindigkeit VR und der Referenzgeschwindigkeit VRref bestimmt; und
- die Steuerung der Nicklage zur Starthilfe in Abhängigkeit von der Geschwindigkeitsabweichung korrigiert, um von einem Start zum anderen ein ähnliches Verhalten des Flugzeuges bei der Rotation zu erhalten.

**2.** Verfahren nach Anspruch 1,
**dadurch gekennzeichnet,**
**dass** die Korrektur der Steuerung der Nicklage zur Starthilfe mit Hilfe der verstellbaren Höhenflosse (2) erfolgt.

**3.** Verfahren nach Anspruch 1,
**dadurch gekennzeichnet,**
**dass** die Korrektur der Steuerung der Nicklage zur Starthilfe mit Hilfe der Höhenruder (4) erfolgt.

**4.** Verfahren nach den Ansprüchen 2 und 3,
**dadurch gekennzeichnet,**
**dass** die Korrektur der Steuerung der Nicklage zur Starthilfe teilweise mit Hilfe der verstellbaren Höhenflosse (2) und teilweise mit Hilfe der Höhenruder (4) erfolgt.

**5.** Verfahren nach einem der Ansprüche 1 bis 4,
**dadurch gekennzeichnet,**
**dass** die Geschwindigkeitsabweichung zwischen den Werten VR und VRref durch das Verhältnis zwischen ihnen berechnet wird.

**6.** Verfahren nach einem der Ansprüche 1 bis 4,
**dadurch gekennzeichnet,**
**dass** die Geschwindigkeitsabweichung zwischen den Werten VR und VRref durch die Differenz zwischen ihnen berechnet wird.

**7.** Verfahren nach einem der Ansprüche 1 bis 6,
**dadurch gekennzeichnet,**
**dass** als Referenzgeschwindigkeit VRref der kleinste Geschwindigkeitswert aus dem Bereich gewählt wird.

**8.** Verfahren nach Anspruch 7,
**dadurch gekennzeichnet,**
**dass** die Referenzgeschwindigkeit VRref gleich dem Produkt KxVS1g ist, in dem K ein Koeffizient größer als 1 ist und VS1g die Geschwindigkeit ist, bei der das Flugzeug (1) überzieht, wenn es sich im Horizontalflug befindet und seine Vorflügel (8) und Hinterkantenklappen (7) ähnlich konfiguriert sind wie beim Start.

**9.** Verfahren nach Anspruch 8,
**dadurch gekennzeichnet,**
**dass** der Koeffizient K von dem Verhältnis zwischen dem Schub des Flugzeuges (1) beim Start und dem Gewicht des Flugzeuges abhängt.

**10.** Verfahren nach Anspruch 9,
**dadurch gekennzeichnet,**
**dass** der Koeffizient K einen Mittelwert von etwa 1,11 hat.

**11.** Verfahren nach den Ansprüchen 2, 6 und 8,
**dadurch gekennzeichnet**,
**dadurch gekennzeichnet,**
**dass** der vorgegebene Wert (iH1) des Ausschlagwinkels der verstellbaren Höhenflosse (2) um einen zusätzlichen Wert ΔiH erhöht wird, des Typs:

$$\Delta iH = K1 \times (VR - K \times VS1g),$$

wobei in diesem Ausdruck K1 ein Koeffizient ist, der von der Referenzgeschwindigkeit VRref, von der Längsposition (cg) des Schwerpunktes (CG) und von der Konfiguration der Hinterkantenklappen (7) und der Vorflügel (8) abhängt.

**12.** Verfahren nach Anspruch 11,
**dadurch gekennzeichnet,**
**dass** der Mittelwert von K1 in der Größenordnung von 0,16°/kt liegt.

**13.** Verfahren nach den Ansprüchen 3, 6 und 8,
**dadurch gekennzeichnet,**
**dass** die Höhenruder (4) um einen zusätzlichen Winkel δq2 mit einem Wert des folgenden Typs ausgeschlagen werden:

$$\delta q2 = K2 \times (VR - K \times VS1g),$$

wobei in diesem Ausdruck K2 ein Koeffizient ist, der von der Referenzgeschwindigkeit VRref, von der Längsposition (cg) des Schwerpunktes (CG) und von der Konfiguration der Hinterkantenklappen (7) und der Vorflügel (8) abhängt.

**14.** Verfahren nach den Ansprüchen 11 und 13, angewendet auf ein Flugzeug (1), in dem die verstellbare Höhenflosse (2) in Hinblick auf die Steuerung der Nicklage n-Mal wirksamer ist als die Höhenruder (4),
**dadurch gekennzeichnet,**
**dass** K2 = n × K1.

**15.** Verfahren nach Anspruch 13, in dem die Kennlinie (C, P), die mit dem Flugzeug (1) verbunden ist und den Ausschlag (δq) der Höhenruder (4) in Abhängigkeit von dem Ausschlagbefehl (δm) der Höhenruder (4) angibt, einen kopflastig trimmenden Teil (P) und einen schwanzlastig trimmenden Teil (C) aufweist, die in einem Nullpunkt (N) miteinander verbunden sind,
**dadurch gekennzeichnet,**
**dass** man die Kennlinie (C, P) verändert, indem man den zusätzlichen Winkel δq2 hinzufügt.

**16.** Verfahren nach Anspruch 15,
**dadurch gekennzeichnet, dass** der zusätzliche Winkel δq2 an wenigstens einem Punkt des schwanzlastig trimmenden Teils (C) hinzugefügt wird.

Fig. 1

Fig. 2

Fig. 3A

Fig. 3B

EP 1 591 854 B1

Fig. 4

Fig. 5

EP 1 591 854 B1

Fig. 7

Fig. 9

Fig. 6

Fig. 8

15